# EUROPEAN PATENT APPLICATION

(11) **EP 1 780 726 A2**
(43) Date of publication of application: **02.05.2007**
(21) Application number: 07100701.7
(22) Date of filing: 30.12.2003
(51) Int. Cl.: G11B 33/02, H02P 7/00

(54) **Movement control device, movement control method, movement control program and recording medium storing the program**

(30) Priority: 08.01.2003 JP 2003001954
(62) Divisional of application: 03258238.9
(71) Applicant: Pioneer Corporation, Meguro-ku, Tokyo (JP)
(72) Inventor: YUASA, Naoki, Kawagoe-shi Saitama 350-8555 (JP); KUMANO, Tadashi, Kawagoe-shi Saitama 350-8555 (JP); YAMANAKA, Tadamassa, Kawagoe-shi Saitama 350-8555 (JP); ODASHIMA, Masahiro, Kawagoe-shi Saitama 350-8555 (JP)
(74) Representative: Haley, Stephen

(57) **Abstract**

A lid (120), which is provided on a body of an acoustic device and moves as being able to open or close a front side thereof where an insertion slot is provided for inserting a recording medium, is moved by driving a motor (211) of a drive section (210) with an operation of an open/close button of a movement controller (234) of a movement control device (200). A temperature sensor (220) detects a temperature of a heading space of the lid on a movement path in a first direction, and the movement thereof is stopped when the temperature is within a predetermined temperature range. The movement is recovered when the predetermined temperature is not detected after a predetermined time has passed. When a contact sensor (233) recognizes the contact between the lid and an object to be contacted, the moving direction is reversed for only a predetermined time. When a temperature determining section (232) recognizes a temperature change within the predetermined time, the movement is restarted.

## Description

The present invention relates to a movement control device for controlling a movement of a movable body, a movement control method, a movement control program and a recording medium storing the program.

Conventionally, an arrangement (prior art 1) disclosed in Japanese Patent Laid-Open Publication No. Hei 4-26948 (see a lower right section on page 2 to a lower right section on page 6) has been known as such type of a movement control device. The prior art 1 is, for instance, used for a vehicle-installed acoustic device or the like. Specifically, the prior art 1 controls a body having a drive that reads data such as music data, voice data and image data recorded on an optical disk or the like to move a lid to be in a closed state, i.e. the lid covers a front side of a body, where an insertion slot is provided for inserting a recording medium, or to be in an open state, i.e. the lid opens the front side.

The control for moving the lid according to the prior art 1 employs a control that reverses a moving direction thereof, in case that the movement of the lid is blocked because the lid contacts with an obstacle or the like during the movement of the lid and does not move to a position for the open state nor the closed state even though a predetermined time has passed. The predetermined time represents a time necessary to move the lid between a position for the open state and a position for the closed state.

However, in the prior art 1, a state that the lid contacts the obstacle (i.e., state that the lid presses against the obstacle) is continued until the aforementioned predetermined time passes after contacting the lid with the obstacle during the movement thereof. A problem that the obstacle cannot be promptly removed to recover the movement of the lid caused by continuation of the contact, is given as an example.

An object of the present invention is to provide a movement control device which is at least able to recognize that a movement of a movable body is blocked and recover the movement of a lid in a prompt manner, a movement control method, a movement control program and a recording medium storing the program.

A movement control device according to an aspect of the present invention includes: a drive section for moving a movable body in a first direction; a temperature detector that detects a temperature of at least a heading space of the movable body on a movement path in the first direction; and a controller that stops the movement of the movable body when the temperature detected by the temperature detector during the movement of the movable body is a predetermined temperature.

A movement control device according to another aspect of the present invention includes: a drive section for moving a movable body in a first direction; a contact sensor that senses a contact of the movable body with an object to be contacted during the movement of the movable body; a temperature detector that detects a temperature of at least a heading space on a movement path of the movable body in the first direction; and a controller that releases the contact of the movable body with the object to be contacted when the contact sensor senses the contact and moves the movable body in the first direction when the temperature detected by the temperature detector varies within a predetermined time after releasing the contact.

A movement control method according to still another aspect of the present invention develops the aforementioned movement control device for controlling a movement of a movable body, in which the movement of the movable body is stopped when a temperature of at least a heading space on a movement path of the movable body in a first direction is a predetermined temperature.

A movement control method according to a further aspect of the present invention develops the aforementioned movement control device of the present invention for controlling a movement of a movable body, includes the steps of: moving a movable body in a first direction; releasing a contact of the movable body with an object to be contacted when the movable body contacts the object to be contacted during the movement of the movable body; and moving the movable body in the first direction when a temperature of at least a heading space of the movable body on a movement path in the first direction varies within a predetermined time after releasing the contact.

A movement control program according to a still further aspect of the present invention executes the movement control method of the present invention by a computer.

A recording medium according to a yet further aspect of the present invention stores the movement control program of the present invention in a manner readable by a computer.
Figs. 1A and 1B are schematic side elevational views each showing an arrangement of an acoustic device according to an embodiment of the present invention;
Fig. 2 is a schematic block diagram showing an arrangement of a movement control device according to the embodiment;
Fig. 3 is a graph showing a temperature change according to the embodiment;
Fig. 4 is a flowchart showing a process of a status 0 in an operation of the movement control device according to the embodiment;
Fig. 5 is a flowchart showing a processing operation of a status 1 according to the embodiment;
Fig. 6 is a flowchart showing a processing operation of a status 2 according to the embodiment;
Fig. 7 is a flowchart showing a processing operation of a status 3 according to the embodiment;
Fig. 8 is a flowchart showing a processing operation of a status 14 according to the embodiment;
Fig. 9 is a flowchart showing a processing operation of a status 15 according to the embodiment;
Fig. 10 is a flowchart showing a processing operation of a status 11 according to the embodiment;
Fig. 11 is a flowchart showing a processing operation of a status 12 according to the embodiment;
Fig. 12 is a flowchart showing a processing operation of a status 13 according to the embodiment;
Fig. 13 is a flowchart showing a processing operation of a status 4 according to the embodiment;
Fig. 14 is a flowchart showing a processing operation of a status 5 according to the embodiment;
Fig. 15 is a flowchart showing a processing operation of a status 14 according to another embodiment;
Fig. 16 is a flowchart showing a processing operation of a status 4 according to the embodiment.

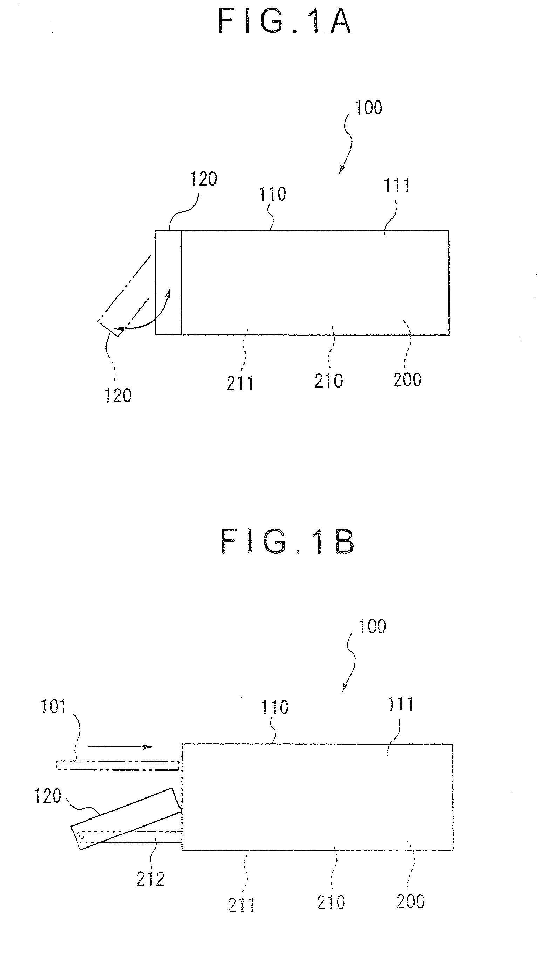

An embodiment according to a movement control device of the present invention will be described below with reference to attached drawings. Figs. 1A and Fig. 1B are schematic side elevational views each showing an arrangement of an acoustic device provided with the movement control device of the present invention. Note that the movement control device of the present invention is not restricted to an arrangement used for the acoustic device.

### [Arrangement of Acoustic Device]

In Fig. 1A and 1B, a reference sign 100 indicates the acoustic device, and the acoustic device 100 includes a body 110 and a lid 120 as a movable body capable of moving. The body 110 includes a substantially rectangular casing 111, a reader (not shown) provided inside the casing 111 to read data recorded on a recording medium 101 such as an optical disk, a processor (not shown) that reproduces the data, and the movement control device 200, which will be described later.

An insertion slot (not shown) is formed on a front side of the casing 111, to install the recording medium 101 onto the reader, and insert into the casing 111. The movement control device 200, of which details will be described later, has a drive section 210 for moving the lid 120 and controls the movement of the lid 120 by controlling the drive section 210. The drive section 210 has a motor 211 and a pair of movement transmitters 212 of which tip ends advance to and retract from the casing 111 along a longitudinal direction by driving the motor 211. Incidentally, the movement control device 200 is not restricted to the arrangement to be provided on the body 110, but the movement control device 200 can be provided on the lid 120, or provided separately from the body 110 and the lid 120. Further, the drive section 210 is neither limited to the above-described arrangement, but any arrangement that moves the lid 120 can be employed. The drive section 210 can be provided on the lid 120, or provided separately from the body 110 and the lid 120.

The casing 111 is provided with a close detection switch (not shown) that detects the lid 120 is at a closed state position as shown in Fig. 1A, and an open detection switch (not shown) that detects the lid 120 is at an open state position as shown in Fig. 1B. The closed state as shown in Fig. 1 A defines a state that the lid 120 covers the front side of the casing 111 to close the insertion slot. The open state as shown in Fig. 1B defines a state that the lid 120 retracts from the front side of the casing 111 to a lower front side and opens the front side of the casing 111 to expose the insertion slot.

For instance, the substantially thin rectangular lid 120 is an operation panel of the acoustic device 100. An operating section, which has various buttons (not shown) to set the operation of the acoustic device 100, is provided on the front side of the lid 120. The operating section, for instance, has the operation button to set to move the lid 120 to be in the closed state in Fig. l A or the open state in Fig. 1B. The lid 120 is movably provided on the casing 111 by the drive section 210. In other words, tip ends of the movement transmitters 212 are pivotably supported around both ends of a lower edge of the lid 120 as shown in Fig. 1 B for instance, therefore the lid 120 can be moved between the open state position as shown in Fig. 1A and the closed state position as shown in Fig. 1B, caused by drive of the motor 211.

More specifically, the lid 120 is moved as described below. Since the movement transmitter 212 advances from the casing 111 caused by driving of the motor 211, the lower edge portion of the lid 120 moves apart from the casing 111, at the same time, the upper edge portion of the lid 120 slides downward on the front side of the casing 111. With this arrangement, as shown in Fig. 1B, the lid 120 retracts from the front side of the casing 111 to the lower front side and opens the front side of the casing 111 to be in the open state in which the insertion slot is exposed. On the other hand, since the movement transmitter 212 retracts to the casing 111 caused by driving of the motor 211, the lower edge portion of the lid 120 moves toward the casing 111, at the same time, the upper edge portion of the lid 120 slides upward on the front side of the casing 111. With this arrangement, as shown in Fig. 1A, the lid 120 covers the front side of the casing 111 to be in the closed state in which the insertion slot is closed.

### [Arrangement of Movement Control Device]

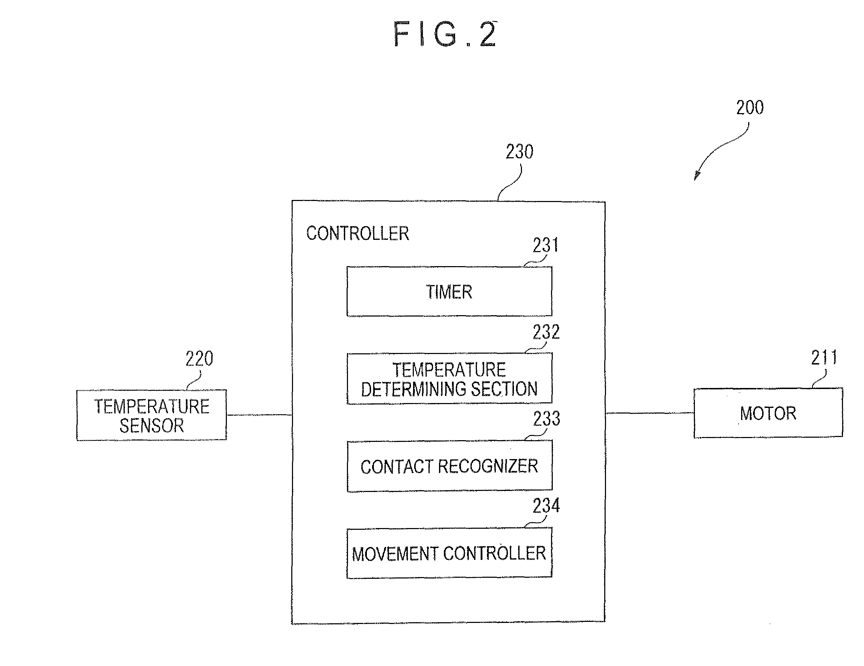

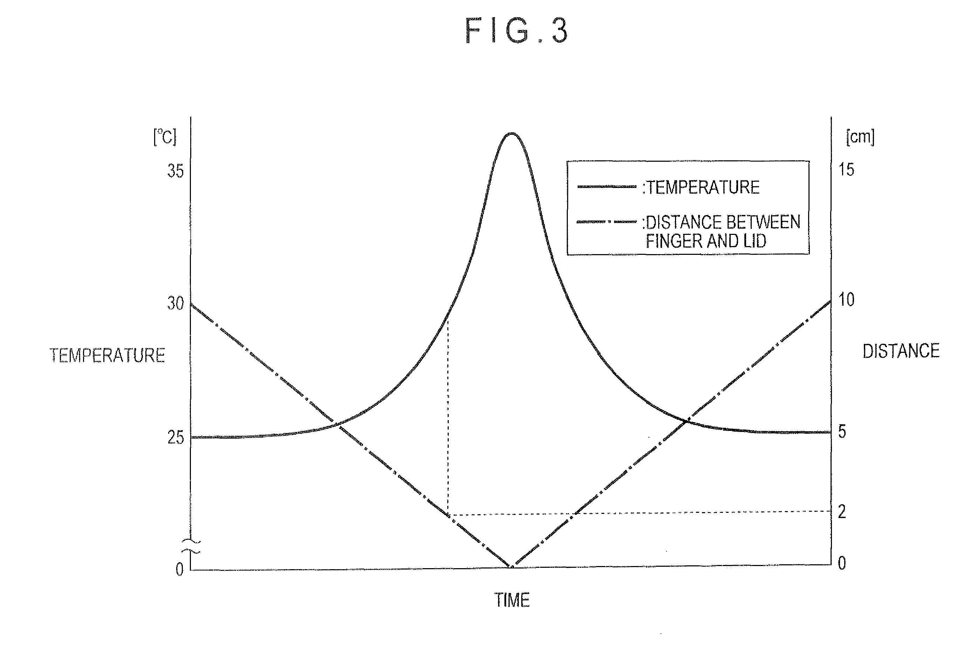

An arrangement of the movement control device of the present invention will be described below with reference to attached drawings. Fig. 2 is a schematic block diagram showing the arrangement of the movement control device. Fig. 3 is a distance-temperature graph showing a distance between the lid and a user's finger with respect to a temperature detected by a temperature sensor.

The movement control device 200 has the drive section 210 provided with the above-described motor 211 and the movement transmitter 212, the temperature sensor 220 as a temperature detector, and a controller 230 for controlling the drive section 210. The controller 230 is provided with a timer 231, temperature determining section 232, contact sensor 233, and a movement controller 234.

The temperature sensors 220, for instance, are respectively provided around the upper and the lower edge on a first direction side of the lid 120 to detect the temperature of at least a heading space of the lid 120 on a movement path in the first direction. And then, a signal corresponding to the detected temperature is output to the temperature determining section 232 of the controller 230.

The temperature determining section 232 of the controller 230 compares the temperature detected by the temperature sensor 220 based on the signal output from the temperature sensor 220 to a predetermined temperature range which is set and stored in a build-in memory (not shown) or the like in advance to determine whether the temperature detected by the temperature sensor 220 has been within the predetermined temperature range or not.

The predetermined temperature range being a criterion for the temperature determining section 232 is set by the distance between the lid 120 and the user's finger as shown in Fig. 3 with respect to the temperature detected by the temperature sensor 220. Fig. 3 shows a relationship of the distance between the lid 120 and the user's finger with respect to the temperature detected by the temperature sensor 220 when the lid 120 is installed in a vehicle. For instance, when the temperature in the vehicle is 25 degrees and the temperature of the user's finger is 36.5 degrees, the temperature on the movement path would be approximately 37 degrees when the distance between the user's finger and the lid 120 is 0 cm, and the temperature on the movement path would be approximately 30 degrees when the distance between the user's finger and the lid 120 is 2 cm. Therefore, when the lid 120 is installed in the vehicle, the lid 120 is previously prevented from the user's finger touching since the temperature range is set at least between approximately 30 degrees or above and approximately under 37 degrees as the predetermined temperature range; and the movement of the lid 120 is controlled after detecting that the temperature of at least a heading space of the lid 120 on a movement path in the first direction during the movement of the lid 120 within the predetermined temperature range. Incidentally, Fig. 3 shows that the temperature is approximately 25 degrees when the lid 120 is 5 cm or more away from the user's finger.

The temperature determining section 232 monitors the temperature change according to the signal output from the temperature sensor 220 in a predetermined time clocked by a timer 231.

The contact sensor 233 senses that the lid 120 contacts with an object to be contacted, which is a component outside the acoustic device 100, for instance, an obstacle disturbing the movement of the lid 120. A specific arrangement to sense the contact may be a pressure sensor provided on the lid 120; a pulse detector that instructs the lid 120 generate a pulse during the movement and reads the generated pulse to recognize the moving state; a timeout section that determines the contact by recognizing whether the lid 120 moves to be in the open state or the closed state within a predetermined time or not; a load detector that reads a voltage and a current values of the motor 211. which moves the movement transmitter 212, and recognizes a load of the motor 211 to determine the contact. Incidentally, any arrangement can be employed since the contact can be sensed.

The movement controller 234 recognizes a setting input to move the lid 120 with an input operation of the operating section, and then controls the lid 120 to move appropriately by controlling the motor 211 of the drive section 210. The movement control means that the motor 211 of the drive section 210 is controlled to stop the movement of the lid 120, i.e., to stop driving of the motor 211 when the temperature determining section 232 detects the temperature within the predetermined temperature range, or when the contact sensor 233 senses the contact between the lid 120 and the object to be contacted. After the control for stopping the movement of the lid 120, the movement controller 234 immediately processes to reverse the moving direction of the lid 120 and to retract the lid 120 in a second direction opposite to the first direction for only the predetermined time.

When the temperature determining section 232 determines that the temperature of the lid 120 stays within the predetermined temperature range even though the predetermined time clocked by the timer 231 has passed after stopping the lid 120 or after moving the lid 120 to the second direction, or when the temperature determining section 232 does not detect the temperature change which may be outside the predetermined temperature range within the predetermined time, the movement controller 234 starts the lid 120 moving to the second direction or continues the lid 120 moving. In other words, when the temperature stays at the predetermined temperature, or when the temperature change which may be outside the predetermined temperature range within the predetermined time is not detected, such situation can be considered that the user continuously operates the acoustic device 100, or the object to be contacted still exists in the first direction since the removal of the object to be contacted is not worked out. As moving the lid 120 in the second direction, the lid 120 moves to a shunting direction not to disturb the operation or the removing work for the object to be contacted.

Incidentally, when the temperature determining section 232 does not detect the temperature within the predetermined temperature range, or when the temperature determining section 232 detects the temperature change within the predetermined time, the movement controller 234 controls the lid 120 to restart moving to the first direction before stopping the lid 120.

The controller 230 is connected with the open and close detection switches respectively provided on the casing 111. The controller 230 recognizes the open/close state of the open/close detection switches to determine whether the lid 120 is in the open sate or the closed state.

### [Operation of Movement Control Device]

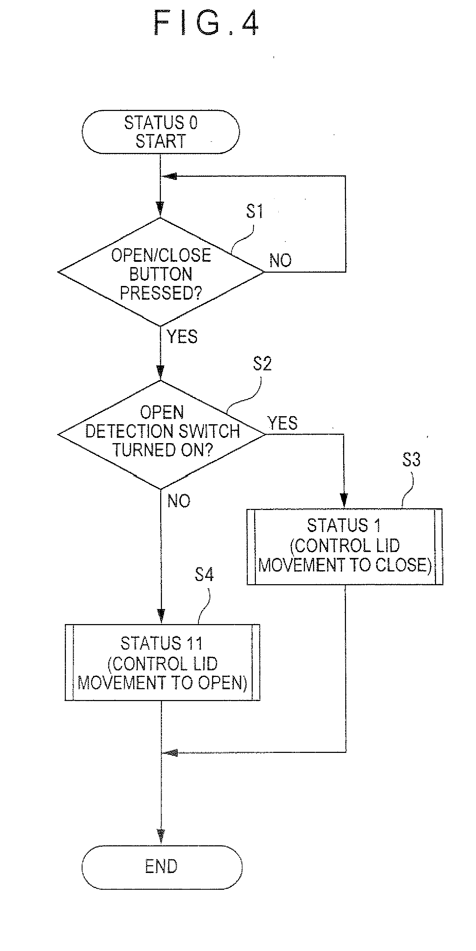

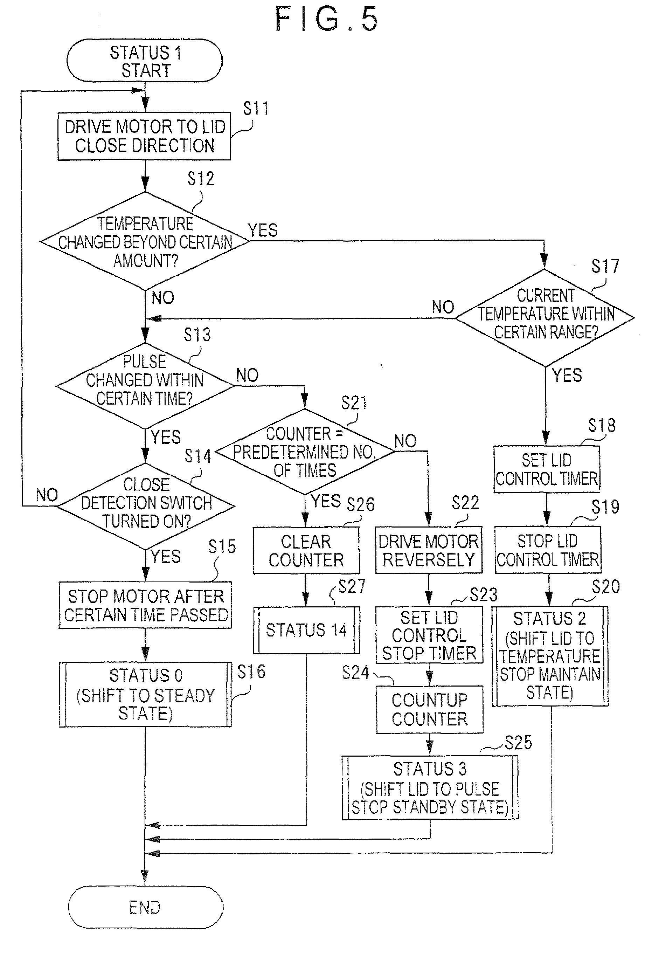

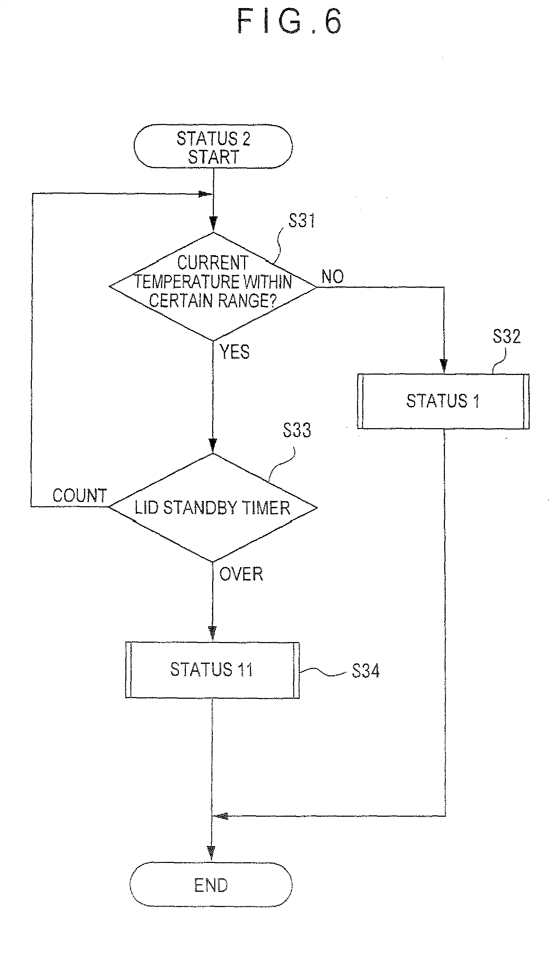

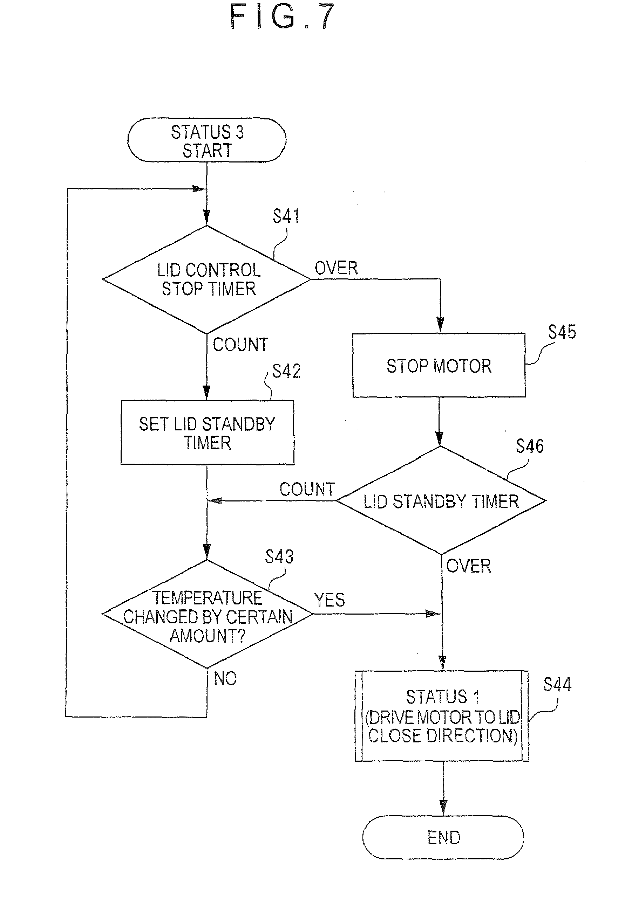

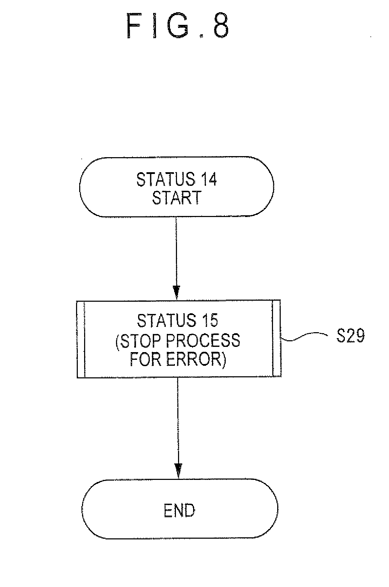

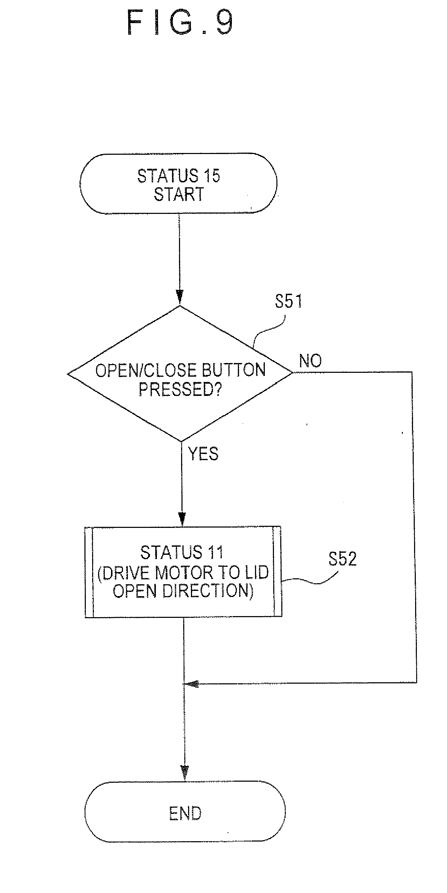

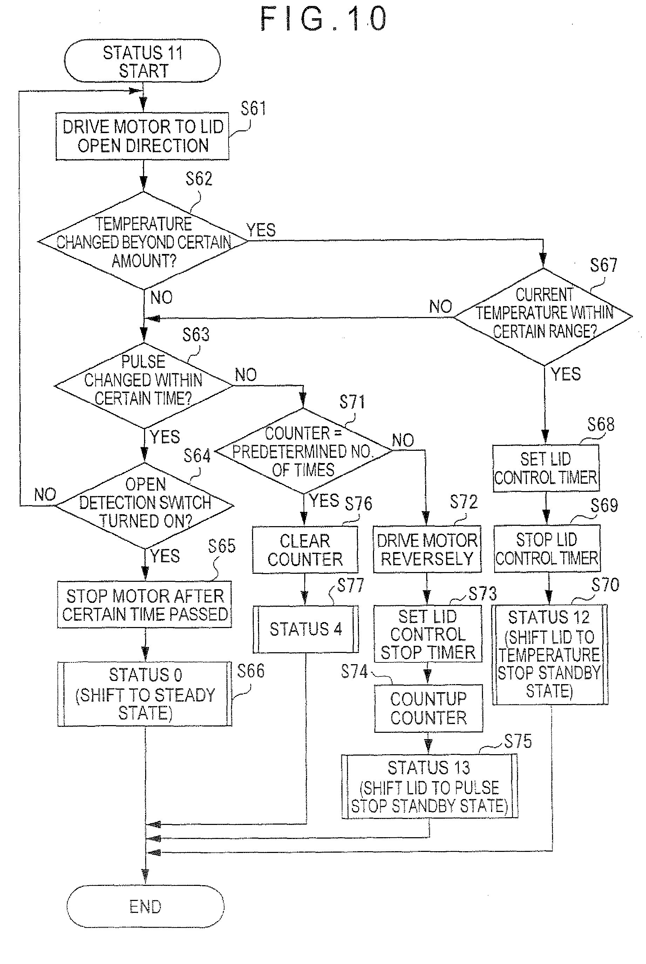

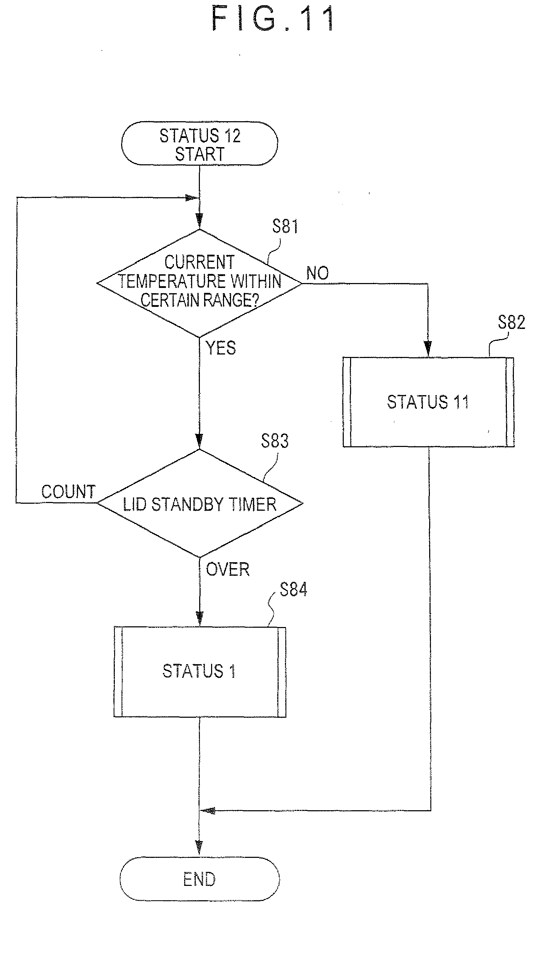

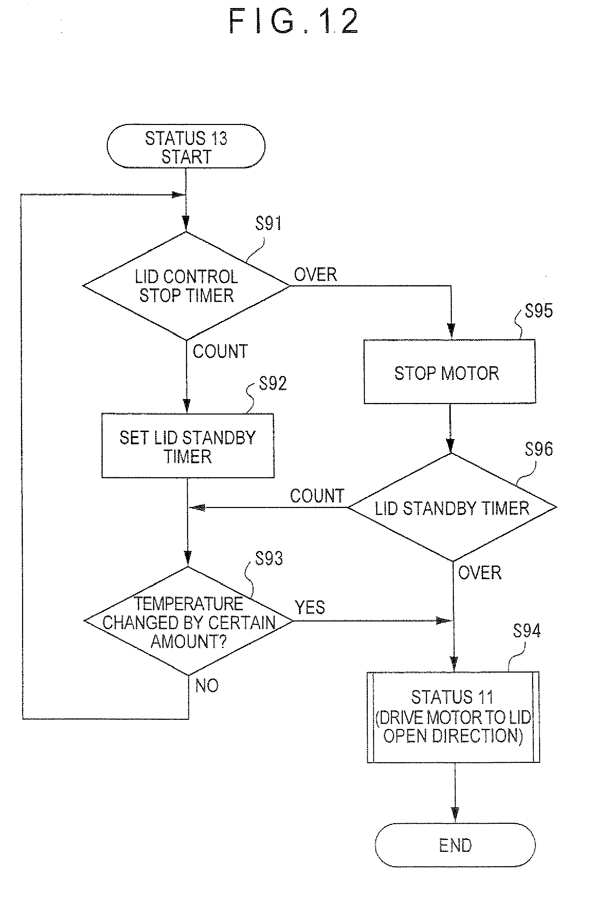

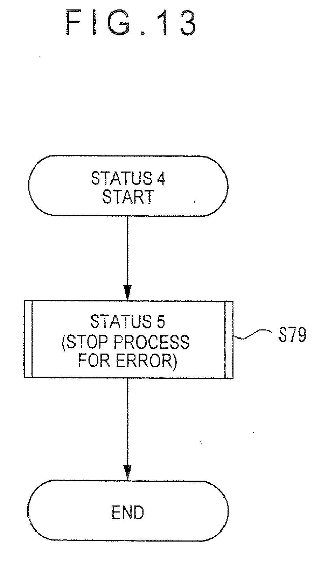

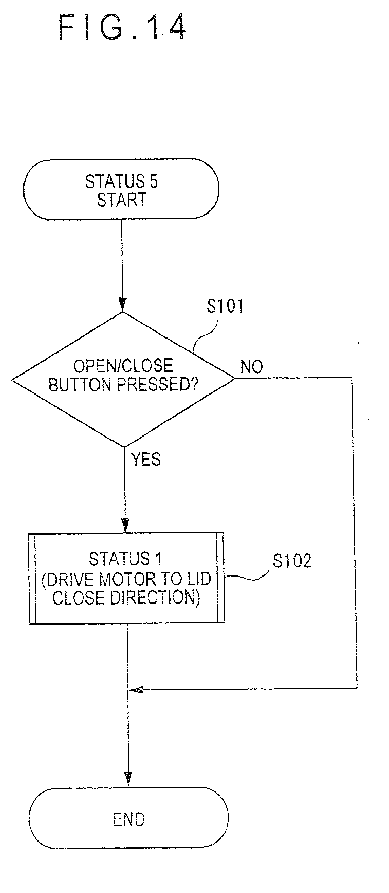

An operation of the movement control device will be described below with reference to attached drawings. Fig. 4 is a flowchart showing a process of a status 0 in the operation of the movement control device. Fig. 5 is a flowchart showing a processing operation of a status 1. Fig. 6 is a flowchart showing a processing operation of a status 2. Fig. 7 is a flowchart showing a processing operation of a status 3. Fig. 8 is a flowchart showing a processing operation of a status 14. Fig. 9 is a flowchart showing a processing operation of a status 15. Fig. 10 is a flowchart showing a processing operation of a status 11. Fig. 11 is a flowchart showing a processing operation of a status 12. Fig. 12 is a flowchart showing a processing operation of a status 13. Fig. 13 is a flowchart showing a processing operation of a status 4. Fig. 14 is a flowchart showing a processing operation of a status 5.

Firstly, since the acoustic device 100 is activated due to the power supply, the movement control device 200 sifts to the status 0, i.e., a standby state for recognizing an open/close request of the lid 120, As shown in the flowchart in Fig. 4, in the process at the status 0, the controller 230 determines whether an input operation of an operation button (not shown, and an open/close button will indicate the operation button hereinafter) provided on the lid 120 to open or close the lid 120, has been executed or not (step S1). When the controller 230 determines that the input operation of the open/close button has been executed, the controller 230 then determines whether the open detection switch has been turned ON or not (step S2). In the step S1, when it is determined that the input operation is not executed, the process returns to the step S 1 to be the standby state for the input operation.

In the step S2, when the open detection switch is determined as being turned ON, the lid 120 is then determined as being at the open state position as shown in Fig. 1B, the process shifts to the status 1 which moves the lid 120 to the closed state position as shown in Fig. 1A (step S3), and then the process of the status 0 ends. In the step S2, when the open detection switch is determined as not being turned ON, the lid 120 is then determined as not being at the open state position as shown in Fig. 1B, i.e., being at the closed state position as shown in Fig. 1A, or being at a position between the open state and the closed state, the process shifts to the status 11 which moves the lid 120 to the open state position as shown in Fig. 1B (step S4), and then the process of the status 0 ends.

In the process of the status 1, as shown in the flowchart in Fig. 5, the controller 230 controls the driving state of the motor 211 of the drive section 210 to the state that the lid 120 moves to the closed state position, by the movement controller 234 (step S11). And then, the temperature determining section 232 of the controller 230 determines whether there is the temperature change beyond the certain amount of the predetermined threshold value at the heading space of the lid 120 on a movement path in the first direction toward the position of the lid 120 for the open state, or not (step S12). For instance, the temperature determining section 232 determines whether the temperature has changed by approximately 5 degrees or more from approximately 25 degrees, possibly within the predetermined temperature range when the object to be contacted such as the user's finger etc. does not exist on the movement path of the lid 120.

In the step S12, when it is determined that there is no temperature change beyond the certain amount, the contact sensor 233 of the controller 230 determines whether the object to be contacted has been contacted to the moving lid 120 or not. For instance, when the pulse detector is used to recognize the moving state of the lid 120 as the contact sensor 233, it is determined whether a pulse change is detected or not within the predetermined time clocked by the timer 231 of the controller 230 (step S13). Incidentally, the object to be contacted detected by the pulse detector is different from the one that causes the temperature change beyond the certain amount such as the user's finger. The assumed object to be contacted does not cause the temperature change beyond the certain amount, for instance, the temperature change at the heading space of the lid 120 on a movement path is less than approximately 5 degrees by the lid 120 approaching. In such case, the existence of the object to be contacted is detected by the contact with the lid 120.

In the step S13, when it is determined that the pulse change is recognized within the predetermined time and the lid 120 moves without disturbance, a counter (not shown) of the controller 230 is cleared, and then the controller 230 determines whether the close detection switch is turned ON and the lid 120 is at the closed state position, or not (step S14). In the step S14, when it is determined that the closed detection switch is not turned ON, it indicates that the lid 120 is not moved to the closed state position, the process returns to the step S11 to continue the movement of the lid 120 by the movement controller 234. On the other hand, in the step S14, when it is determined that the closed detection switch is turned ON, it indicates that the lid 120 is moved to the closed state position. The movement controller 234 stops driving the motor 211 after a predetermined time (step S15), the process shifts to the standby state for recognizing the open/close request of the status 0 (step S16), and then the process of the status 0 ends.

In the step S12, when the temperature determining section 232 determines that there is the temperature change beyond the certain amount in the temperature detected by the temperature sensor 220, the controller 230 makes the temperature determining section 232 determine whether the temperature detected by the temperature sensor 220 is within the predetermined temperature range of the predetermined thresh hold value, or not (step S17). In the step S17, when the temperature determining section 232 determines that the temperature detected by the temperature sensor 220 is not within the predetermined temperature range, the temperature change which is not caused by the existence of the object to be contacted but due to an environmental change such as a sunlight effect around the acoustic device 100 is considered, and the process shifts to the step S13 to continue controlling the movement of the lid 120 by the movement controller 234.

On the other hand, in the step S17, when the temperature determining section 232 determines that the temperature is within the predetermined temperature range, for instance, it is considered that the user's finger etc. operating the acoustic device 100 approaches to the heading space of the lid 120 on a movement path in the first direction. With this determination, the controller 230 makes the timer 231 start clocking (step S18), and makes the movement controller 234 stop driving the motor 211 to stop the movement of the lid 120 (step S19). And then, the process shifts to the status 2, which is the process for the standby state for stopping the movement of the lid 120 to the closed state due to the temperature (step S20), and the process of the status 1 ends.

On the other hand, in the step S13, when it is determined that the pulse change is not detected within the predetermined time and the movement of the lid 120 is disturbed, i.e., when the contact sensor 233 determines that the object to be contacted contacts to the moving lid 120, it is determined whether the counter (not shown) of the controller 230 counts a predetermined number of times which is previously set and stored in the build-in memory or not (step S21). In other words, it is determined whether the number of times, in which the process reversing the moving direction of the lid 120 by detecting the contact with the object to be contacted is repeated, is a predetermined number of times or not.

In the step S21, when it is determined that the number of times counted by the counter has not reached the predetermined number of times, the controller 230 controls to reverse the motor 211 by the movement controller 234 (step S22). In accordance with the reverse control, the lid 120 is moved in the second direction opposite to the first direction, i.e. toward the open state position, and the contact with the object to be contacted is released. At this time, the controller 230 starts clocking the stop time of the lid control by the timer 231 (step S23). Further, the controller 230 processes to increase the count of the counter by 1 (step S24), the process shifts to the status 3 which is the process for the stop standby-state due to the pulse when the lid 120 moves to the closed state (step S25), and the process of the status 1 ends.

In the step S21, when it is determined that the number of times counted by the counter reaches the predetermined number of times, the controller 230 clears the count counted by the counter, i.e., the counter is set to "0" (step S26), the process shifts to the status 14 for the stopping process caused by the movement failure when the lid 120 moves to the closed state (step S27), and then the process of the status 1 ends.

On the other hand, in the status 2 which is the process for the stop standby-state due to the temperature when the lid 120 moves to the closed state, as shown in the flowchart of the Fig. 6, the temperature determining section 232 determines whether the temperature detected again by the temperature sensor 220 is within the predetermined temperature range or not (step S31). In the step S31, when it is determined that the temperature is not within the predetermined temperature range, the user's finger etc. is not considered to exist at the heading space of the lid 120 on a movement path in the first direction where the lid 120 moves to the closed state position, the process returns to the status 1 which moves the lid 120 to the closed state position again (step S32), and then the process for the status 2 ends.

On the other hand, in the step S31, when the temperature determining section 232 determines that the temperature is within the predetermined temperature range, the user's finger etc. is considered to still exist at the heading space of the lid 120 on a movement path in the first direction where the lid 120 moves to the closed state position, the controller 230 determines whether the lid standby time clocked by the timer 231 has reached the predetermined time or not (step S33). In the step S33, when it is determined that the lid standby time has not reached the predetermined time, or clocking of the lid standby time has not started, the process returns to the step S31. On the other hand, in the step S33, when it is determined that the lid standby time has reached the predetermined time, the process shifts to the status 11 which moves the lid 120 in the second direction to the open state position (step S34), and then the process for the status 2 ends.

The status 3 as the process for the stop standby-state due to the pulse when the lid 120 moves to the closed state, as shown in the flowchart in Fig. 7, it determines whether the stop time of the lid control clocked by the controller 230 with the timer 231 has reached the predetermined time or not (step S41). In the step S41, when it is determined that the stop time of the lid control has not reached the predetermined time, or clocking of the stop time of the lid control has not started, the timer 231 starts clocking the lid standby time (step S42). And then, the controller 230 makes the temperature determining section 232 determine whether a certain amount of the temperature change is brought at the temperature detected by the temperature sensor 220 within the predetermined time (step S43). For instance, the determination is caused by detecting the temperature change less than approximately 5 degrees generated by removing the object to be contacted, which does not cause the temperature change beyond the certain amount.

When the step S43 is considered not to cause the temperature change beyond the certain amount, the process sifts to the step S41. On the other hand, when the step S43 is considered to cause the temperature change of the certain amount, the process shifts to the status 1 (step S44), and then the process for the status 3 ends. In other words, since the step S22 previously senses the contact with the object to be contacted and the process is carried out to move the lid 120 to the open state position in the second direction opposite to the first direction, it is determined that the object to be contacted is removed from the heading space of the lid 120 on a movement path in the first direction because of the temperature change, the lid 120 moves again to the closed state position by the movement controller 234.

In the step S41, when it is determined that the clocked stop time of the lid control has reached the predetermined time, for instance, 100ms, the controller 230 makes the movement controller 234 stop the motor 211 (step S45). In other words, the controller 230 processes to stop the lid 120 after moving the lid 120 in some measure in the second direction toward the open state position opposite to the first direction since the movement controller 234 reverses driving of the motor 211 due to the contact with the object to be contacted. And then, the controller 230 determines whether the lid standby time counted by the timer 231 has reached the predetermined time or not (step S46).

In the step S46, when it is determined that the lid standby time has not reached the predetermined time, for instance 5 seconds, or clocking of the lid standby time has not started, the process returns to the step S43. In the step S46, when the lid standby time has reached the predetermined time, for instance 5 seconds, the process shifts to the status 1 of the step S44, and then the process for the status 3 ends. In other words, it is determined that the contacted object possibly has been removed from the heading space of the lid 120 on a movement path in the first direction due to the predetermined time passage, and then the process shifts to the status 1 in which the movement controller 234 moves the lid 120 again to the closed state position.

On the other hand, as shown in the flowchart in Fig. 8, the status 14 processes to shift to the status 15 due to the stopping process caused by the movement failure of the lid 120 (step S29). In other words, as shown in the flowchart in Fig. 9, the status 15 determines whether the open/close button has been operated or not (step S51).

When the open/close button is considered not to be operated in the step S51, the status 3 is repeated. Then, it is determined that the contact is recognized even though the reverse movement of the lid 120 is repeated for the predetermined number of times, and the object to be contacted is considered not to be removed even though the predetermined time has past, therefore, the process for the status 15 ends, and a series of above-described processes to move the lid 120 by operating the open/close button would be terminated. In other words, the drive control of the motor 211 is terminated, and the motor 211 is stopped if driving, such that the movement of the lid 120 is stopped. Further, in the step S51, when it is determined that the open/close button is operated, the process shifts to the status 11 that moves the lid 120 in the second direction to the open state position, which is opposite to the first direction described in the previous process that the lid 120 is moved to the closed state position (step S52), and then the status 15 ends.

On the other hand, as shown in Fig. 10, in the process for the status 11, the controller 230 controls the driving state of the motor 211 of the drive section 210 to the state that the lid 120 moves to the open state position by the movement controller 234 (step S61). And then, by the temperature determining section 232 of the controller 230, it is determined whether there is the temperature change beyond the certain amount of the predetermined thresh hold value at the heading space of the lid 120 on a movement path in the first direction to the open state position of the lid 120 (step S62).

In the step S62, when it is determined that there is no temperature change beyond the certain amount, the contact sensor 233 of the controller 230 determines whether the object to be contacted has been contacted to the moving lid 120 or not. For instance, when the pulse detector is used to recognize the moving state of the lid 120 as the contact sensor 233, it is determined whether the pulse change is detected or not within the predetermined time clocked by the timer 231 of the controller 230 (step S63).

In the step S63, when it is determined that the pulse change is recognized within the predetermined time, and the lid 120 moves without disturbance, a counter (not shown) of the controller 230 is cleared, and then the controller 230 determines whether the open detection switch is turned ON and the lid 120 is at the open state position or not (step S64), In the step S64, when it is determined that the open detection switch is not turned ON, it indicates that the lid 120 is not moved in the second direction to the open state position, the process returns to the step S61 to continue the movement of the lid 120 by the movement controller 234. On the other hand, in the step S64, when it is determined that the open detection switch is turned ON, it indicates that the lid 120 is moved to the open state position. The movement controller 234 stops driving the motor 211 after the predetermined time (step S65), the process shifts to the status 0 (step S66), and then the process of the status 11 ends.

In the step S62, when the temperature determining section 232 determines that there is the temperature change beyond the certain amount for the temperature detected by the temperature sensor 220, the controller 230 makes the temperature determining section 232 determine whether the temperature detected by the temperature sensor 220 is within the above-described predetermined temperature range of the predetermined thresh hold value or not (step S67). In the step S67, when the temperature determining section 232 determines that the temperature detected by the temperature sensor 220 is not within the predetermined temperature range, the temperature change which is not caused by the existence of the object to be contacted but due to an environmental change such as the sunlight effect around the acoustic device 100, is considered, and the process shifts to the step S63 to continue controlling the movement of the lid 120 by the movement controller 234.

On the other hand, in the step S67, when the temperature determining section 232 determines that the temperature is within the predetermined temperature range, for instance, it is considered that the user's finger etc. operating the acoustic device 100 approaches to the heading space of the lid 120 on a movement path in the first direction. With this determination, the controller 230 makes the timer 231 start clocking (step S68), and makes the movement controller 234 stop driving the motor 211 to stop the movement of the lid 120 (step S69). And then, the process shifts to the status 12. which is the process for the standby state for stopping the movement of the lid 120 to the open state due to the temperature (step S70), and the process of the status I 1 ends.

On the other hand, in the step S63, when it is determined that the pulse change is not detected within the predetermined time and the movement of the lid 120 is disturbed, i.e., when the contact sensor 233 determines that the object to be contacted contacts to the moving lid 120, it is determined whether the counter (not shown) of the controller 230 counts the predetermined number of times which is previously set and stored in the build-in memory or not (step S71). In other words, it is determined whether the number of times, in which the process to reverse the moving direction of the lid 120 by detecting the contact with the object to be contacted is repeated, is the predetermined number of times or not.

In the step S71, when it is determined that the number of times counted by the counter has not reached the predetermined number of times, the controller 230 controls to reverse of the motor 211 by the movement controller 234 (step S72). In accordance with the reverse control, the lid 120 is moved in the first direction toward the closed state position, which is opposite to the second direction. At this time, the controller 230 starts clocking the stop time of the lid control by the timer 231 (step S73). Further, the controller 230 processes to increase the count of the counter by 1 (step S74), the process shifts to the status 13 that is the process for the stop standby-state due to the pulse when the lid 120 moves to the open state (step S75), and the process of the status 11 ends.

In the step S71, when it is determined that the number of times counted by the counter reaches the predetermined number of times, the controller 230 clears the count counted by the counter, i.e., the counter is set to "0" (step S76), the process shifts to the status 4 for the stopping process caused by the movement failure when the lid 120 moves to the open state (step S77), and then the process of the status 11 ends.

On the other hand, in the status 12 which is the process for the stop standby-state due to the temperature when the lid 120 moves to the open state, as shown in the flowchart of the Fig. 11, the temperature determining section 232 determines whether the temperature detected again by the temperature sensor 220 is within the predetermined temperature range or not (step S81). In the step S81, when it is determined that the temperature is not within the predetermined temperature range, the user's finger etc. is not considered to exist at the heading space of the lid 120 on a movement path in the second direction where the lid 120 moves to the open state position, the process returns to the status 11 which moves the lid 120 to the open state position again (step S82), and then the process for the status 12 ends.

On the other hand, in the step S81, when the temperature determining section 232 determines that the temperature is within the predetermined temperature range, the user's finger etc. is considered to still exist at the heading space of the lid 120 on a movement path in the second direction where the lid 120 moves to the open state position, the controller 230 determines whether the lid standby time clocked by the timer 231 has reached the predetermined time or not (step S83). In the step S83, when it is determined that the lid standby time has not reached the predetermined time, or clocking of the lid standby time has not started, the process returns to the step S81. On the other hand, in the step S83, when it is determined that the lid standby time has reached the predetermined time, the process shifts to the status 1 which moves the lid 120 in the first direction to the closed state position (step S84), and then the process for the status 12 ends.

The status 13 as the process for the stop standby-state due to the pulse when the lid 120 moves to the open state as shown in the flowchart in Fig. 12, it determines whether the stop time of the lid control clocked by the controller 230 with the timer 231 has reached the predetermined time or not (step S91). In the step S91, when it is determined that the stop time of the lid control has not reached the predetermined time, or clocking of the stop time of the lid control has not started, the timer 231 starts clocking the lid standby time (step S92). And then, the controller 230 makes the temperature determining section 232 determine whether a certain amount of the temperature change is brought at the temperature detected by the temperature sensor 220 within the predetermined time (step S93).

When the step S93 is considered not to cause the temperature change beyond the certain amount, the process sifts to the step S91. On the other hand, when the step S93 is considered to cause the above-described temperature change of the certain amount, the process shifts to the status I (step S94), and then the process for the status 13 ends. In other words, since the step S72 previously senses the contact with the object to be contacted and the process is carried out to move the lid 120 in the first direction to the closed state position, it is determined that the object to be contacted is removed from the heading space of the lid 120 on a movement path in the second direction because of the temperature change, the lid 120 moves again to the open state position by the movement controller 234.

In the step S91, when it is determined that the clocked stop time of the lid control has reached the predetermined time, for instance, 100ms, the controller 230 makes the movement controller 234 stop the motor 211 (step S95). In other words, the controller 230 processes to stop the lid 120 after moving the lid 120 in some measure toward the closed state position in the first direction opposite to the second direction since the movement controller 234 reverses driving of the motor 211 due to the contact with the object to be contacted. And then, the controller 230 determines whether the lid standby time counted by the timer 231 has reached the predetermined time or not (step S96).

In the step S96, when it is determined that the lid standby time has not reached the predetermined time, for instance 5 seconds, or clocking of the lid standby time has not started, the process returns to the step S93. In the step S96, when the lid standby time has reached the predetermined time, for instance, 5 seconds, the process shifts to the status 11 of the step S94, and then, the process for the status 13 ends. In other words, it is determined that the contacted object possibly has been removed from the heading space of the lid 120 on a movement path in the second direction due to the predetermined time passage, and then the process shifts to the status 11 in which the movement controller 234 moves the lid 120 again to the open state position.

On the other hand, as shown in the flowchart in Fig. 13, the status 4 processes to shift to the status 5 due to the stopping process caused by the movement failure of the lid 120 (step S79). In other words, as shown in the flowchart in Fig. 14, the status 5 determines whether the open/close button has been operated or not (step S101).

In the step S101, when the open/close button is considered not to be operated, the status 13 is repeated. Then, it is determined that the contact is recognized even though the reverse movement of the lid 120 is repeated for the predetermined number of times, and the object to be contacted is considered not to be removed even though the predetermined time has passed, therefore, the process for the status 5 ends, and a series of above-described processes to move the lid 120 by operating the open/close button would be terminated. In other words, the drive control of the motor 211 is terminated, and the motor 211 is stopped if driving, such that the movement of the lid 120 is stopped. Further, in the step S101, when it is determined that the open/close button is operated, the process shifts to the status 1 that moves the lid 120 in the first direction to the closed state position, which is opposite to the second direction described in the previous process that the lid 120 is moved to the open state position (step S102), and then the status 5 ends.

### [Modification of Embodiments]

Incidentally, the scope of the present invention is not restricted to the above specific embodiments, but includes modifications described below as long as an object of the present invention can be attained.

According to the above-described embodiments, though it is described that the lid 120 provided in a turnable manner on the acoustic device 100 is controlled to move, however, the present invention can be applied for controlling various movable bodies, for instance, to control a tray provided inside or outside the acoustic device in a horizontally movable manner and on which a recording medium etc. is mounted. The acoustic device 100 can be applied for various devices, for instance, an acoustic device which is provided with a movable body such as a tray or an operation panel in a movable manner, e.g., an audio device installed in a vehicle or the one for home use etc., or a navigation device which is provided with a movable body such as a display panel in a movable manner.

According to the above-described embodiments, though it is described that the lid 120 is controlled to stop when the predetermined temperature is detected during the movement of the lid 120, however, the lid 120 can be controlled to reverse its moving direction after it is stopped. The control to reverse the moving direction can be applied for a control to move the lid 120 back to the position for the open or the closed state, or the control to move the lid 120 for only 100ms as described above, for instance. According to the above-described embodiments, though the predetermined temperature is described as the predetermined temperature range, however, approximately 30 degrees, at which a distance between the lid 120 and the user's finger is 2 cm, can be the predetermined temperature, for instance.

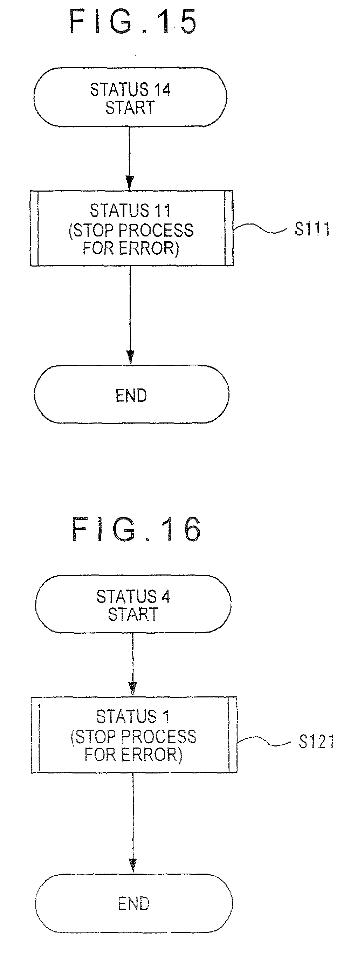

When the temperature change at the heading space in the original direction is not detected though the predetermined time has passed after moving the lid 120 in the reversed direction for the predetermined time (100ms) due to the recognition of the contact, the lid 120 is controlled to move to the original direction before reversing its direction due to the contact. If the contact is still detected, the direction of the lid 120 is repeatedly reversed and it is finally moved to the reversed direction, which is opposite to the original (first) direction. However, it is not restricted to the above control. When the first contact is recognized, not only the moving direction is reversed by the predetermined time (100ms), but also it is moved to, for instance, the initial position where the movement has been started; the open/closed state position in the reversed direction opposite to the original direction when the contact is recognized, therefore it is unnecessary to repeat reversing its direction. For more specific instance, in the status 14, the process may shift to the status 11 (step S111) as shown in the flowchart in Fig 15 instead of the status 15, and in the status 4, the process may shift to the status 1 (step S121) as shown in the flowchart in Fig. 16 instead of the status 5.

Though the lid 120 is moved to the reversed direction opposite to the original direction when the contact is recognized after the control for repeating the reverse, the movement of the lid 120 may be stopped to terminate the process for controlling the series of the movement, and the lid 120 may be manually moved in the case that the contact is recognized even though the reverse control is executed for the predetermined time i.e. the predetermined number of times.

The aforementioned embodiments describe that the process shifts to the statuses 1 or I 1 to restart the movement of the lid 120 in the case that the predetermined temperature is detected within the predetermined time after stopping the movement of the lid 120 when the predetermined temperature is detected at the heading space of the lid 120 on a movement path in the first direction; or when the predetermined temperature is not detected even though the predetermined time has passed after the movement of the lid 120 is stopped. However, it is not restricted to the aforementioned control, but the process can shift to the statuses 1 or 11 to restart the movement of the lid 120 in case that the predetermined temperature is detected within the predetermined time after stopping the movement of the lid 120 and moving in the second direction; or in another case that the predetermined temperature is not detected even though the predetermined time has passed after the movement of the lid 120 is stopped and then moved to the second direction.

The controller 230 may be a personal computer; a plurality of computers that are connected over a network; an element such as IC or CPU of a microcomputer; and a circuit board where a plurality of electric components are mounted thereon, etc. Further, the controller 230 can be arranged as a program recorded on a recording medium etc. or the one acquired over a network, and the controller 230 may function by installing such program. Employing such arrangement can easily promote the expansion of use.

Specific arrangements and steps for implementing the present invention can be appropriately modified as long as an object of the present invention can be attained.

### [Advantages of Embodiments]

As described above, in the embodiments of the present invention, it can be recognized that the user's finger etc. which causes the temperature change beyond the certain amount exists since the temperature of at least the heading space of the lid 120 on a movement path in the first direction, is detected as the predetermined temperature. With this arrangement, the movement of the lid 120 can be stopped before the user's finger etc. contacts, or the lid 120 can be moved to the second direction opposite to the first direction. Therefore, the disturbance of the movement of the lid 120 can be promptly recognized, and the lid 120 can be prevented from contacting with the user's finger etc. Thus, any inconvenience, for instance, the user's discomfort can be avoided.

In the embodiments of the present invention, the movement of the lid 120 can be automatically recovered in a prompt manner since the movement of the lid 120 is restarted moving to the first direction before stopping the movement of the lid 120 when the predetermined temperature is not detected within the predetermined time after stopping the movement of the lid 120 or moving the lid 120 to the second direction.

In the embodiments of the present invention, the movement recovery of the lid 120 can be canceled and for instance, the user can be urged to remove the finger disturbing the movement since the lid 120 is moved to the second direction opposite to the first direction before stopping the movement of the lid 120 when the predetermined temperature is detected even though the predetermined time has passed after stopping the movement of the lid 120 or moving the lid 120 to the second direction.

In the embodiments of the present invention, even if the object to be contacted such as the user's finger, which does not cause the temperature change beyond the certain amount, exists on the movement path of the lid 120, the lid 120 can be moved to the second direction to release the contact with the object to be contacted by recognizing its contact. Therefore, the inconvenience, in which the lid 120 contacts with the object to be contacted for long time, can be dissolved and the object to be contacted can be promptly removed.

Further, within the predetermined time after the lid 120 being reversed, the removal of the object to be contacted is recognized since the temperature change at the heading space of the lid 120 on a movement path in the first direction before the lid 120 is moved to the second direction, therefore the movement of the lid 120 can be automatically and promptly recovered.

The user can be urged to remove the object to be contacted by moving the lid 120 in the direction opposite to the first direction before the contact with the object to be contacted since the object can be recognized as not being removed yet when the temperature change is not detected even though the predetermined time has passed after the lid 120 being reversed.

## Claims

1. A movement control device, comprising:
a drive section for moving a movable body in a first direction;
a contact sensor that senses a contact of the movable body with an object to be contacted during the movement of the movable body;
a temperature detector that detects a temperature of at least a heading space on a movement path of the movable body in the first direction; and
a controller that releases the contact of the movable body with the object to be contacted when the contact sensor senses the contact and moves the movable body in the first direction when the temperature detected by the temperature detector varies within a predetermined time after releasing the contact.

2. The movement control device according to claim 1, wherein the controller moves the movable body in a second direction opposite to the first direction to release the contact when the contact sensor senses the contact of the movable body with the object to be contacted.

3. The movement control device according to claim 1 or 2, wherein the controller moves the movable body in a second direction opposite to the first direction when the temperature detected by the temperature detector does not vary within the predetermined time after releasing the contact.

4. The movement control device according to any one of claims 1 to 3, wherein the movable body is a lid movable relative to a body, and
wherein the drive section moves the lid between a position at which the lid covers at least a part of the body and another position at which the lid opens the part of the body.

5. A movement control method for controlling a movement of a movable body, comprising the steps of:
moving a movable body in a first direction;
releasing a contact of the movable body with an object to be contacted when the movable body contacts the object to be contacted during the movement of the movable body; and
moving the movable body in the first direction when a temperature of at least a heading space of the movable body on a movement path in the first direction varies within a predetermined time after releasing the contact.

6. A recording medium having stored thereon a movement control program for executing a method according to claim 5 in a manner readable by a computer.
